# EUROPEAN PATENT APPLICATION

(11) **EP 0 827 330 A2**
(43) Date of publication of application: **04.03.1998**
(21) Application number: 97306743.2
(22) Date of filing: 02.09.1997
(51) Int. Cl.: H04N 1/32

(54) **Method for copying document with information line**

(30) Priority: 02.09.1996 KR 9637939
(71) Applicant: Samsung Electronics Co., Ltd., Suwon-city, Kyungki-do 441-370 (KR)
(72) Inventor: Choi, Seung-Young, Yongin-gun, Kyungki-do (KR)
(74) Representative: Tunstall, Christopher Stephen

(57) **Abstract**

A copying apparatus includes a key matrix, a display, and a memory having an information line menu format buffer. Information line menu data applied by the user is stored into the information line menu format buffer. Then, the information line menu data is printed out on the top or bottom of a copying paper, when copying a document. Therefore, the user can effectively manage the copied documents.

## Description

### Background of the Invention

The present invention relates to a method of copying a document in a facsimile or copying machine.

In general, a facsimile or copying machine can simply copy a document. Thus, if it is desired to copy a document and keep it with a memorandum such as the title, the author, the number of sheets, and the like, one needs to take the memo and attach the manuscript to the copied document. This is inconvenient for a user.

### Summary of the Invention

It is therefore an objective of the present invention to provide a method for printing out an information line including, for example, document management information on document copies.

Accordingly, the present invention provides a method of copying a document in a copying apparatus including a key matrix, the method comprising receiving information line data via the key matrix, scanning a document to be copied and printing out a copy of the document with the information line data at a predetermined position on the printed copy.

The key matrix may have a number of alphanumeric keys and function keys. The copying apparatus may include a display.

Preferably, the copying apparatus includes a memory having an information line menu format buffer and the method further comprises receiving an information line menu format and storing the information line menu format in the memory, requesting the information line data in accordance with the information line menu format and storing the received information line data in the information line format buffer.

### Brief Description of the Drawings

The present invention will now be described by way of example with reference to the accompanying drawings in which:
Fig. 1 is a block diagram of a facsimile to which the present invention is applicable;
Fig. 2 is a flow chart of the process of adding an information line to a copied document; and
Fig. 3 illustrates a document copy with an information line added.

### Detailed Description of the Preferred Embodiment

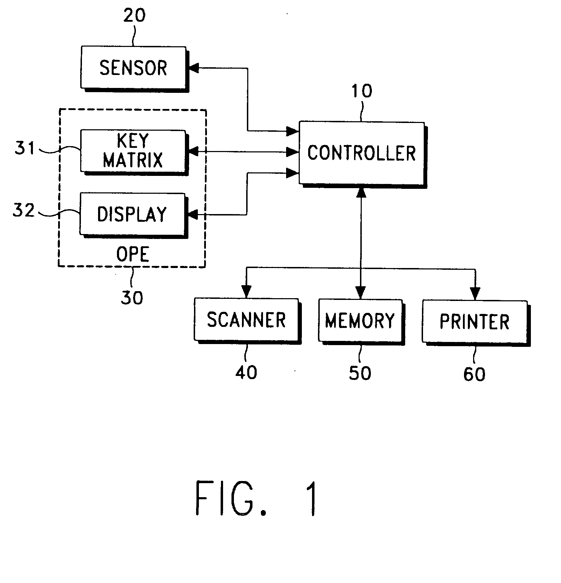

Referring to Fig. 1, a facsimile to which the present invention is applicable includes a controller 10, a sensor 20, an operating panel 30, a scanner 40, a memory 50, and a printer 60. The memory 50 stores a control program of the invention, and data generated during executing the control program. Further the memory 50 includes an information line menu format buffer for storing an information line menu. The controller 10 executes the control program stored in the memory 50 and controls the overall operation of the facsimile.

The operating panel 30 includes a key matrix 31 and a display 32. The key matrix 31 including a plurality of alphanumeric keys and function keys generates key data to the controller 10 upon a key depression by the user. The display 32 includes an LCD (Liquid Crystal Display) to display various display data from the memory 50 under the control of the controller 10. The sensor 20 generates sensing signals to the controller 10, upon sensing the existence of copying paper and the document. The scanner 40 scans the document to provide the memory 50 with the scanned image data. The printer 60 prints out on copying paper the document image data from the memory 50 and the information line menu data that the user has previously set, under the control of the controller 10.

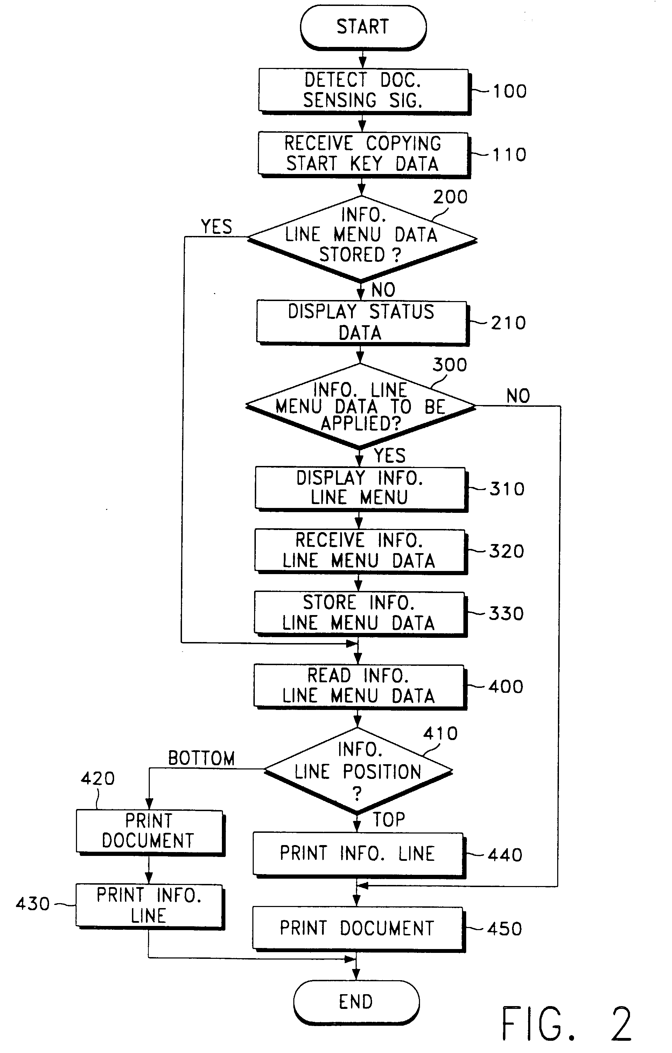

Now, with reference to Figs. 1 through 3, the process of the present invention will be described in detail. When the user piles the documents to be copied, the sensor 20 detects the documents and generates a document sensing signal. Then, the controller 10 detects the document sensing signal from the sensor 20, at step 100. In the meantime, if the user depresses a copying start key in the key matrix 31 to copy the document, the controller 10 receives copying start key data generated from the key matrix 31, at step 110. The controller 10 checks, at step 200, whether or not the information line menu data is stored in the information line menu format buffer of the memory 50.

If the information line menu data is not stored, the controller 10 reads the display data from the memory 50 to display the data on the display 32 at step 210. Here, the display data notifies the user that the information line menu data is not stored in the memory 50, and to allow the user to apply the information line menu data, if desired, prior to printing out the document. In response to the status message on the display 32, the user may operate the key matrix 31, if he desires to apply the information line menu data. Then, the controller 10 receives, at step 300, the key data from the key matrix 31 and judges from the key data whether or not the user desires to apply the information line menu data.

If it is judged that the user desires to apply the information line menu data, the controller 10 reads an information line menu from the information line menu format buffer of the memory 50 to display the information line menu on the display 32, at step 310. Here, the information line menu refers to the document management information and the information required for adding the information line. For example, the document management information refers to the user name, the title of the document, the number of sheets, the date and time of the copy and the like. Of course, it is possible to add or remove the document management information, if necessary. In particular, the information line menu includes positional information to decide the position at which the information line is to be printed on the copying paper.

Further, the information line menu format includes a copying format of the information line menu. It should be understood that the copying format can be freely varied and the number of information lines can be one, two or above. In accordance with the information menu displayed on the display 32, the user may operate the key matrix 31 to apply the information menu data. Here, the last key data may be menu setting completion key data. Then, the controller 10 receives the key data from the key matrix 31 at step 320, and stores the key data into the information line menu format buffer of the memory 50 at step 330.

The controller 10 reads the information line menu data from the information line menu format buffer of the memory 50, at step 400. The controller 10 checks, at step 410, whether the copying position of the information line is the top or the bottom. If the copying position is the top, the printer 60 first prints out the information line menu data at the top of the copying paper at step 440. Thereafter, the printer 60 prints out the document image data stored in the memory 50 below the information line at step 450. However, if the copying position is the bottom, the printer 60 first prints out the document image data stored in the memory 50 at step 420. Thereafter, the printer 60 prints out the information line menu data stored in the information line menu format buffer of the memory 50 at the bottom of the copying paper at step 430.

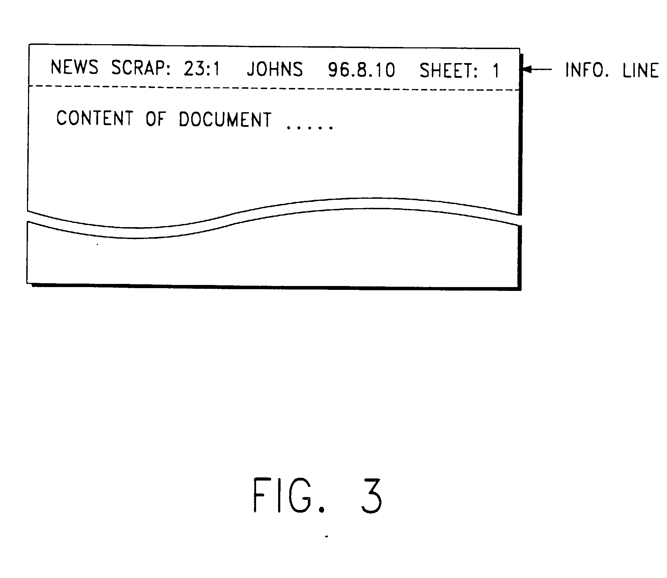

Moreover, if the information line menu data is presently stored at the step 200, the procedure goes to the step 400 to read the information line menu data. Further, if it is judged at the step 300 that the user does not desire to apply the information line menu data, the procedure goes to step 450 to print out the document image data. Fig. 3 illustrates an example of copying paper with an information line added at the top.

As described in the foregoing, the facsimile according to the preset invention can print out the information line at the top or bottom of the copying paper in accordance with the user's wishes, so that the user can effectively manage the copied document.

## Claims

1. A method of copying a document in a copying apparatus including a key matrix, the method comprising receiving information line data via the key matrix, scanning a document to be copied and printing out a copy of the document with the information line data at a predetermined position on the printed copy.

2. A method according to claim 1 in which the key matrix has a number of alphanumeric keys and function keys.

3. A method according to claim 1 or claim 2 in which the copying apparatus includes a display.

4. A method according to any preceding claim in which the copying apparatus includes a memory having an information line menu format buffer and the method further comprises receiving an information line menu format and storing the information line menu format in the memory, requesting the information line data in accordance with the information line menu format and storing the received information line data in the information line format buffer.

5. A method of copying a document as described herein with reference to and as illustrated in the accompanying drawings.
